# EUROPEAN PATENT SPECIFICATION

(11) **EP 4 413 431 B1**
(45) Date of publication and mention of the grant of the patent: **23.04.2025**
(21) Application number: 22783066.8
(22) Date of filing: 16.09.2022
(51) Int. Cl.: G05D 1/00, H04W 4/44, H04W 4/02, G08G 1/00, B60L 53/80, G06Q 10/04, G06Q 10/06, G06Q 10/0631, G06Q 50/02

(54) **OPTIMAL ENERGY STORAGE UTILIZATION**
OPTIMALE ENERGIESPEICHERNUTZUNG
UTILISATION OPTIMALE DE STOCKAGE D'ÉNERGIE

(30) Priority: 08.10.2021 SE 2151241
(43) Date of publication of application: 14.08.2024
(73) Proprietor: Epiroc Rock Drills Aktiebolag, 701 91 Örebro (SE)
(72) Inventor: PERSSON, Anders, 663 91 Hammarö (SE); MALM, Patrik, 719 94 Vintrosa (SE)
(74) Representative: Epiroc Rock Drills AB
(86) International application number: PCT/SE2022/050816
(87) International publication number: WO 2023/059239

(56) References cited:
- WO-A1-2020/009645
- WO-A1-2021/121579
- US-A1- 2017 368 684
- US-A1- 2019 263 288

## Description

### Field of the Invention

The present invention relates to the field of mining machines, and more specifically to a system comprising a fleet of at least partially autonomous mining machines and a method of computing an optimized energy storage utilization in such a system.

### Background of the Invention

Fleets of mining machines are usually operated simultaneously in a working area to execute a shared work assignment, the performance of which shared work assignment requires the performance of individual work tasks at individual locations by individual machines in the fleet.

The performance of the individual work tasks requires application of an appropriate machine for the specific task, which machine will require a certain amount of energy for performing its individual work task and for propelling it to and from its individual work location.

The energy for performing work and for propulsion is commonly provided by internal combustion engines or electrical motors, which respectively require fuel, such as e.g. petrol or diesel, or sources of electricity, such as e.g. batteries and/or fuel cells. In cases where fuel cells are used, these are usually fueled by hydrogen in order to provide electricity.

For practical and safety reasons refueling or charging are often performed at dedicated servicing areas, where e.g. combustible fuel can be handled safely separated from e.g. blasting operations and similar. Thus, each machine will, in addition to the energy requirement for performing its work task, require a certain amount of energy for propelling it to and from such servicing areas to and from its work location. Document US2017368684A1 discloses autonomous vehicles in a warehouse, wherein the autonomous vehicles replace their batteries at a battery exchange station. Document US2019263288A1 discloses that an autonomous vehicle runs on battery power. There is also a battery station car (which is also an autonomous vehicle), which provides the autonomous vehicle with fully charged battery. A server determines from the respective location information from the autonomous vehicle and the battery station car a meeting point for battery replacement.

### Summary of the Invention

An objective of the present disclosure is to provide a simple and secure solution for energy storage utilization in a system comprising a fleet of at least partially autonomous mining machines, configured to operate in a defined mining environment, having a defined working area and a defined servicing area, which servicing area is configured to house one or more unconnected energy storages and equipment for replenishment of such unconnected energy storages, at which mining environment a shared work assignment comprising at least one current task for each respective mining machine is performed. This objective is achieved in a first aspect by a system that comprises: a respective propulsion unit configured to provide mobility of each respective mining machine; respective on-board equipment associated with each respective mining machine; one or more machine sensors configured to monitor each respective mining machine in the fleet of mining machines; a population of interchangeable energy storages, each energy storage having one or more sensors configured to monitor the respective energy storage, and each energy storage being selectively connectable to at least one amongst the fleet of mining machines for supplying its respective propulsion unit and respective on-board equipment; a spatial localization system for deriving a location of each mining machine and each energy storage in the mining environment; a communication interface providing a data link between each mining machine in the mining environment and to a fog- and/or cloud-computation system; wherein the fog- and/or cloud- computation system is configured to compute, based on data from the respective mining machines and energy storages, data from the spatial localization system, and data relating to the shared work assignment, an optimized energy storage utilization with respect to at least one of the following optimization targets productivity, cost or safety, and deploy to the fleet of mining machines, via the communication interface, a workflow information for the performance of the shared work assignment based on the optimized energy storage utilization, which workflow comprises at least one current task for each respective mining machine.

The herein proposed system ensures that an optimized energy storage utilization with respect to at least one of productivity, cost or safety, is deployed to the fleet of mining machines for performance of a shared work assignment. The invention is defined in the appended claims.

In one embodiment, the one or more machine sensors that monitor each respective mining machine in the fleet of mining machines are configured to provide data with respect to at least one environmental property.

In one embodiment, the one or more sensors that monitor the respective energy storages are configured to provide data with respect to at least one of: use-status; remaining capacity; wear and health; and machine connectivity compatibility.

In one embodiment, the data from the shared work assignment comprises data with respect to at least one of: a total shared work assignment plan, an individual task plan, individual operation plans, individual operation cycles, individual operation types, mining environment infrastructure capabilities and constraints.

In one embodiment, the fog- and/or cloud- computation system is further configured to compute an individual optimized energy storage utilization for the respective mining machines and the respective energy storages.

In one embodiment, the fog- and/or cloud- computation system is further configured to compute the optimized energy storage utilization based on different optimization targets for the respective mining machines in the fleet of mining machines.

In one embodiment, the fog- and/or cloud- computation system is further configured to compute the optimized energy storage utilization based on location data from the spatial localization system taking into account at least one of: required time to run a respective mining machine to an appropriate interchangeable energy storage at the servicing area or at another mining machine, required energy to run a respective mining machine to an appropriate interchangeable energy storage at the servicing area or at another mining machine; required time to change energy storage or required time to replenish energy storage.

In a second aspect of the present disclosure, there is provided a method of computing an optimized energy storage utilization in a system according to the first aspect comprising: acquiring data relating to a shared work assignment; acquiring data relating to each respective mining machine in the fleet of mining machines using one or more machine sensors; acquiring data relating to each respective energy storage using one or more energy storage sensors; acquiring data relating to a location of each mining machine and each energy storage in the mining environment using a spatial localization system; providing the acquired data to a fog- and/or cloud- computation system using a communication interface; computing, by the fog- and/or cloud- computation system, based on the provided data, an optimized energy storage utilization with respect to at least one of the following optimization targets productivity, cost or safety, and automatically deploying to the fleet of mining machines, via the communication interface, a workflow information for the performance of the shared work assignment based on the optimized energy storage utilization, which workflow comprises at least one current task for each respective mining machine.

In a third aspect of the present disclosure, there is provided a non-transitory computer-readable storage medium that stores a program configured to execute the method of computing an optimized energy storage utilization in a system according to the second aspect.

In a fourth aspect of the present disclosure, there is provided a computer program product comprising instructions which, when the program is executed by a computer, cause the computer to carry out the method of computing an optimized energy storage utilization in a system according to the second aspect.

### Brief Description of the Drawings

With reference to the appended drawings, below follows a more detailed description of example embodiments of the invention, wherein:
Fig. 1 shows a schematic view of a system comprising a fleet of at least partially autonomous mining machines operating in a defined mining environment whilst being energized using a population of interchangeable energy storages;
Fig. 2 shows a flow chart, schematically illustrating a method of computing an optimized energy storage utilization in a system according to figure 1.

### Detailed Description of Example Embodiments

In the following, a detailed description of a system 1 comprising a fleet of at least partially autonomous mining machines 2 operating in a defined mining environment 3 whilst being energized using a population of interchangeable energy storages 6 according to the present disclosure is presented.

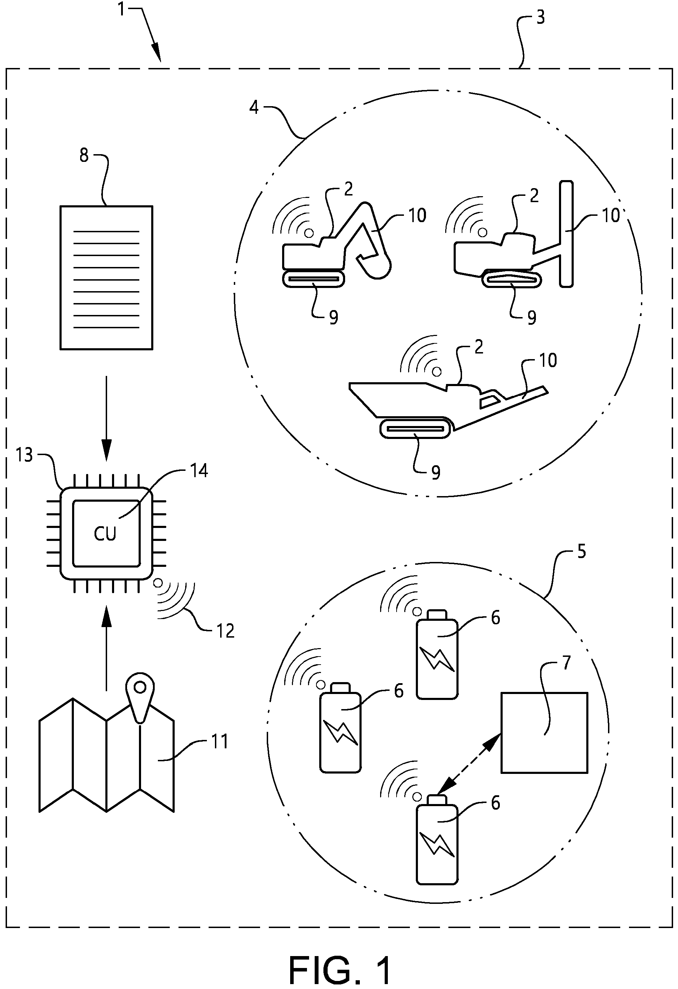

With reference to Fig. 1, the defined mining environment 3 has a defined working area 4 and a defined servicing area 5. The servicing area 5 is configured to house one or more unconnected energy storages 6 and equipment for replenishment 7 of such unconnected energy storages 6. The defined servicing area 5 ensures that energy storages 6, e.g. storages for combustible fuel and /or electric power, for suppling the mining machines 2 can be handled safely.

A shared work assignment 8 comprises at least one current task for each respective mining machine 2 to be performed at the mining environment 3.

The expression "mining machines" as used in the present disclosure may include: drilling rigs; excavators, shovels, draglines, bulldozers, loaders, scrapers, skid steers, graders, dump trucks, haul trucks, tank vehicles, water vehicles, forklifts, human transport, cranes, conveyor systems, classifiers, crushers and multi purpose vehicles.

Drilling rigs are used for several purposes, exploration drilling which aims to identify the location and quality of a mineral, and production drilling, used in the production-cycle for mining and/or construction.

Excavators, either track-mounted or tire-mounted, including backhoes, which are a type of excavator equipped with a bucket that faces toward itself. The typical backhoe design incorporates an inward-facing bucket affixed to an articulated arm, or "boom." Backhoes are often used for removing and loading overburden as well as scraping down high banks and digging ditches.

Shovels, sometimes called "power shovels," are versatile excavation machines, often track-mounted, with a large, outward-facing bucket at the end of a powerful, articulated boom that can rotate 360 degrees. Shovels are used primarily to dig out and remove overburden as well as selectively load material for transport.

Draglines represent a type of specialized excavation equipment that operate by casting a heavy cable-hung bucket outward from a crane-like boom and dragging the bucket toward itself to remove large amounts of overburden, load ore, and manage stockpiles. Draglines can be equipped with buckets of specific design and weight to match the materials being mined.

Bulldozers are track-mounted vehicles equipped with a wide, vertical front-mounted pusher blade that can be raised and lowered during operation. Heavy, powerful, and extremely stable, bulldozers are typically used to clear land, push material short distances, do grade work, and manage stockpiles and work areas.

Loaders are large, typically tire-mounted vehicles with a deep, wide bucket mounted at the front. Loaders are used to load mined material into haul trucks and feeders, push or dump overburden, and manage stockpile or refuse areas. In sand and gravel operations, loaders may also be used for excavation.

Scrapers are a type of earthmoving machine with an open, centrally mounted hopper or bowl with a blade-like leading edge that can be raised or lowered hydraulically to selectively remove and spread overburden over level or relatively level terrain.

Skid steers, often tire mounted, are quick, compact, highly maneuverable, and extremely versatile machines which perform a broad range of vital duties throughout the mine. They may be used in excavation work to carry, spread, and load loose material as well as serve an array of grading, site preparation, construction, demolition, and repair functions.

Graders, also commonly referred to as road graders, motor graders, or simply as a blade, is a form of heavy equipment with a long blade used to create a flat surface during grading.

Dump trucks, or off-highway dumpers, are construction vehicles with a wide hydraulically operated dump bed. They are intended for transporting masses over difficult terrain and are often used in connection with major earthworks.

Haul trucks, or "haulers," are tire-mounted vehicles with a deep, wide hydraulically operated dump bed commonly used to transport and place large volumes of mined material from a pit to stockpiles.

Tank vehicles are vehicles that are used to transport fuel to different locations on a site and water vehicles are vehicles that are used to transport water to different locations on the site.

Forklifts (also called lift trucks, jitneys, fork trucks, fork hoists, and forklift trucks) are powered industrial trucks used to lift and move materials over short distances.

Human transport is required as active mining operations are often spread across a large area, making walking to distant locations impractical and potentially dangerous. Miners, contractors, and supervisors often need to move quickly between work areas to do their jobs, perform maintenance, and address issues as they arise. A broad range of common passenger vehicles and pickup trucks may thus share haulage roads to transport people, tools, and small equipment where they are needed.

Cranes are a type of lifting equipment typically used to lift, place, and transport heavy items such as equipment, building materials, and mined material over short distances. Although some cranes can be stationary, many are mobile units that may be tire-mounted, track-mounted, or truck- mounted.

Conveyor systems such as belt conveyors are designed to carry bulk material on a wide belt that rotates around two or more pulleys. At least one of the pulleys are driven by a motor that powers the conveyor system.

Classifiers are a type of sorting system used to separate coarse and fine particles from one another using water. They are typically located downstream of crushers and screens.

Crushers are machines designed to reduce large rocks into smaller rocks, gravel, sand or rock dust.

Screens are machines used in sorting, classifying, dewatering, scalping, and desliming applications.

Multi purpose vehicles are vehicles that are used for transport, service, exchange equipment to and from required locations on a site.

In the drawing figures, like reference numerals designate identical or corresponding elements throughout the several figures. It will be appreciated that these figures are for illustration only and do not in any way restrict the scope of the present disclosure.

As illustrated in Fig. 1, the system 1 further comprises a respective propulsion unit 9 configured to provide mobility of each respective mining machine 2, e.g. for travelling to and from the defined working area 4 as well as to and from the defined servicing area 5.

The system 1 further comprises respective on-board equipment 10 associated with each respective mining machine 2. Such on-board equipment 10 may e.g. be different types of tooling or actuators, manipulators sensors and control systems, some of which may comprise mechanical-, electric-, water-, hydraulic- or pneumatic-systems and control systems.

Mechanical system include structures to be part of, and carry, onboard integrated systems, such as booms, feeds, plates, covers, tracks, frames, coolers, cabins, canopies, etc..

Electric systems comprise electrical components that may be arranged in several electrical sub-systems, low and high voltage. They may include general purpose modules, I/O modules, control modules, sensors, electrical motors, pumps, electrical cabins, harnesses, cabling, inverters, converters, batteries, filters, transformers, etc..

Water system, e.g. water mist systems to prevent dust from escaping into the air by binding it to water. Such systems may comprise tanks, nozzle, hoses, sensors, valves, regulators, etc..

Hydraulic systems are collections of interconnected components using pressurized hydraulic fluid to perform work.

Pneumatic systems are collections of interconnected components using compressed air to perform work.

Control system manages, commands, directs, or regulates the behavior of other devices or systems using control loops to do work in an integrated system in order to achieve robust and reliable functions.

As an example of on-board equipment 10, a drilling system is key feature of a drill rig integrated system and utilize one or more of the other systems.

One or more machine sensors, not shown separately in the drawings as being part of the previously discussed on-board equipment 10, are configured to monitor each respective mining machine 2 in the fleet of mining machines. These machine sensors are suitably configured to provide data with respect to at least one environmental property.

The expression "environmental property" as used in the present disclosure may include rock properties, terrain properties (e.g. slopes), ambient temperatures, machine specifications; power and energy requirement for completing a current task and obstacles, such as e.g. rocks, vehicles, people and trees.

A population of interchangeable energy storages 6 is part of the system. Each energy storage 6 has one or more sensors, not shown separately in the drawings as being integral parts of the energy storages 6. The one or more sensors of each energy storage 6 are configured to monitor the respective energy storage 6. These energy storages 6 may e.g. be storages for combustible fuel and /or electric power, such as fluid-fuel tanks, gas-fuel tanks or batteries or battery packs.

Each energy storage 6 is selectively connectable to at least one amongst the fleet of mining machines 2, for supplying its respective propulsion unit 9 and respective on-board equipment 10. The respective energy storages 6 may be of different sizes and have different capacities, such that some sizes only are connectable to a selection of mining machines 2 among the fleet of mining machines.

The one or more sensors that monitor the respective energy storages 6 may be configured to provide data with respect to at least one of: use-status; remaining capacity; wear and health; and machine connectivity compatibility.

The system 1 further comprises a spatial localization system 11, for deriving a location of each mining machine 2 and each energy storage 6 in the mining environment 3.

The spatial localization system 11 may rely on positioning sensors such as GNSS based sensors, e.g. GPS, GLONASS, Beidou or Galileo based positioning sensors. Note that this list is not exhaustive and that any spatial localization system suitable for use with the herein disclosed system may be utilized.

A communication interface 12 is also part of the system. The communication interface 12 provides a data link between each mining machine 2 in the mining environment 3 and to a fog- and/or cloud- computation system 13. The communication interface 12 is suitably arranged for wireless communication over a suitable communication network, such as a radio-frequency wireless network, e.g. cellular-telephone network, wireless local-area network (WLAN) or similar.

The fog- and/or cloud- computation system 13 is configured to compute an optimized energy storage 6 utilization based on data from the respective mining machines 2 and energy storages 6, data from the spatial localization system 11, and data relating to the shared work assignment 8.

Cloud computing is an on-demand availability of remote computer system resources, such as data storage (cloud storage) and computing power. Fog computing, also called Edge Computing, is intended for distributed computing where numerous "peripheral" devices connect to a cloud. Fog computing relies on doing as much processing as possible using computing units co-located with the data-generating devices, so that processed rather than raw data is forwarded to the cloud, and the bandwidth requirements thus reduced. A benefit of using Fog computing is that as the processed data usually is needed by the same devices that generated the data, why latency between input and response can be minimized by processing locally rather than remotely.

The fog- and/or cloud- computation system 13 may further be configured to compute an individual optimized energy storage utilization for the respective mining machines 2 and the respective energy storages 6, and may still further be configured to compute the optimized energy storage utilization based on different optimization targets for the respective mining machines 2 in the fleet of mining machines.

The fog- and/or cloud- computation system 13 may also be configured to compute the optimized energy storage utilization based on location data from the spatial localization system 11 taking into account at least one of: required time to run a respective mining machine 2 to an appropriate interchangeable energy storage 6 at the servicing area 5 or at another mining machine 2, required energy to run a respective mining machine 2 to an appropriate interchangeable energy storage 6 at the servicing area 5 or at another mining machine 2; required time to change energy storage 6 or required time to replenish energy storage 6.

The data from the shared work assignment 8 may comprise data with respect to at least one of: a total shared work assignment plan, an individual task plan, individual operation plans, individual operation cycles, individual operation types, mining environment infrastructure capabilities and constraints.

The optimized energy storage utilization is computed with respect to at least one of the following optimization targets, productivity, cost or safety.

Any suitable optimization algorithm may be employed for computing the optimized energy storage utilization. The optimization algorithm may be executed iteratively by comparing various solutions till an optimum or a satisfactory solution is found. There are two distinct types of optimization algorithms widely used today, Deterministic Algorithms and Stochastic Algorithms. Gradient descent, for example, is an efficient optimization algorithm that attempts to find a local or global minimum of the cost function. The cost function represents what we want to minimize. For example, our cost function might be tuned towards minimizing cost, for cost efficient production. Our cost function may also be tuned towards minimizing time for performing certain operations, thus maximizing productivity, or also towards minimizing risk, thus maximizing safety. Optimization may be performed to combine a balance of the above optimization targets.

A workflow information for the performance of the shared work assignment 8 is deployed to the fleet of mining machines 2, via the communication interface 12. This workflow is based on the optimized energy storage utilization and should comprise at least one current task for each respective mining machine 2.

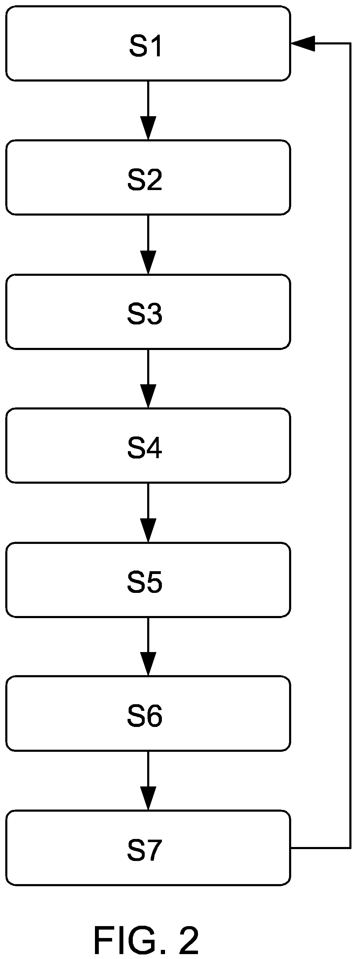

With reference to Fig. 2, there is shown a flow chart, schematically illustrating a method of computing an optimized energy storage utilization in a system as described herein.

According to the method, data relating to a shared work assignment 8 is acquired S1. Data relating to each respective mining machine 2 in the fleet of mining machines 2 is acquired S2.

Furthermore, data relating to each respective energy storage 6 is acquired S3, using one or more energy storage sensors. Data relating to a location of each mining machine 2 and each energy storage 6 in the mining environment 3 is acquired S4, using a spatial localization system 11.

The spatial localization system 11 may rely on positioning sensors such as GNSS based sensors, e.g. GPS, GLONASS, Beidou or Galileo based positioning sensors. Note that this list is not exhaustive and that the positioning sensors that provisions the data could be any positioning system that provides data suitable for use with the herein disclosed method.

The acquired data is provided S5 to a fog- and/or cloud- computation system 13 using a communication interface 12.

Computing S6 based on the provided data, by the fog- and/or cloud-computation system 13, an optimized energy storage utilization with respect to at least one of the following optimization targets productivity, cost or safety. The method concludes in deploying S7 to the fleet of mining machines 2, via the communication interface 12, a workflow information for the performance of the shared work assignment 8 based on the optimized energy storage 6 utilization. This workflow should comprise at least one current task for each respective mining machine 2. Note, however, a current task, as used herein, include the task of being idle, e.g. performing no work operations and remaining stationary.

It should be noted that although the acquiring of data is described herein in a way that could be interpreted as a specific sequence of data acquisitions S1, S2, S3 and S4, this acquiring of data could be done in parallel, i.e. through performing data acquisitions S1, S2, S3 and S4 simultaneously, or in any sequential order including all data acquisitions S1, S2, S3 and S4.

Envisaged herein is also a non-transitory computer-readable storage medium 14 that stores a program configured to execute the method of computing an optimized energy storage 6 utilization in a system 1 as described herein.

The non-transitory computer-readable storage medium 14, that stores a program configured to execute the method of updating vehicle ownership authorizations, is suitably a non-volatile memory, i.e. a memory that retains stored data after power is turned off, such as an electrically erasable programmable read-only memory (EEPROM), a flash Read-only Memory (ROM), a hard disk drive (HDD), solid state drive (SSD), an optical storage media or similar.

Further envisaged herein is also a computer program product comprising instructions which, when the program is executed by a computer, cause the computer to carry out the method of computing an optimized energy storage 6 utilization in a system 1 as described herein.

Although the invention has been illustrated and described in detail in the drawings and foregoing description, such illustration and description are to be considered illustrative or exemplary and the invention is not limited to the disclosed embodiments. For example, the non-transitory computer-readable storage medium 14 may, where a system 1 is connected, i.e. has a wired or wireless connection to a computer network, such as the internet, alternatively be located remote from the system 1, e.g. in a remote server or so-called cloud-service, and accessed via the wired or wireless connection.

## Claims

1. A system (1) comprising a fleet of at least partially autonomous mining machines (2), configured to operate in a defined mining environment (3), having a defined working area (4) and a defined servicing area (5), which servicing area (5) is configured to house one or more unconnected interchangeable energy storages (6) and equipment for replenishment (7) of such unconnected interchangeable energy storages (6), at which mining environment (3) a shared work assignment (8) comprising at least one current task for each respective mining machine (2) is performed, the system (1) comprising:
- a respective propulsion unit (9) configured to provide mobility of each respective mining machine (2),
- respective on-board equipment (10) associated with each respective mining machine (2),
- one or more machine sensors, providing data from the machine, said sensors configured to monitor each respective mining machine (2) in the fleet of mining machines;
- a population of said interchangeable energy storages (6), each energy storage (6) having one or more sensors, providing data from the interchangeable energy storages, said sensors configured to monitor the respective energy storage (6), and each energy storage (6) being selectively connectable to at least one amongst the fleet of mining machines (2) for supplying its respective propulsion unit (9) and respective on-board equipment (10);
- a spatial localization system (11) for deriving location data of each mining machine (2) and each energy storage (6) in the mining environment (3);
- a communication interface (12) providing a data link between each mining machine (2) in the mining environment (3) and to a fog- and/or cloud- computation system (13);
wherein
- the fog- and/or cloud- computation system (13) is configured to compute, based on the data from the respective mining machines (2) and energy storages (6), the location data from the spatial localization system (11), and data relating to the shared work assignment (8), an optimized energy storage utilization with respect to at least one of the following optimization targets productivity, cost or safety, and deploy to the fleet of mining machines (2), via the communication interface (12), a workflow information for the performance of the shared work assignment (8) based on the optimized energy storage utilization, which said workflow comprises at least one current task for each respective mining machine (2).

2. The system according to claim 1, wherein the one or more machine sensors (not shown) that monitor each respective mining machine (2) in the fleet of mining machines are configured to provide data with respect to at least one environmental property.

3. The system according to claim 1, wherein the one or more sensors that monitor the respective energy storages (6) are configured to provide data with respect to at least one of: use-status; remaining capacity; wear and health; and machine connectivity compatibility.

4. The system according to claim 1, wherein the data from the shared work assignment (8) comprises data with respect to at least one of: a total shared work assignment plan, an individual task plan, individual operation plans, individual operation cycles, individual operation types, mining environment infrastructure capabilities and constraints.

5. The system according to claim 3, wherein the fog- and/or cloud- computation system (13) further is configured to compute an individual optimized energy storage utilization for the respective mining machines (2) and the respective energy storages (6).

6. The system according to claim 1, wherein the fog- and/or cloud- computation system (13) further is configured to compute the optimized energy storage utilization based on different optimization targets for the respective mining machines (2) in the fleet of mining machines.

7. The system according to claim 1, wherein the fog- and/or cloud- computation system (13) further is configured to compute the optimized energy storage utilization based on location data from the spatial localization system (11) taking into account at least one of: required time to run a respective mining machine (2) to an appropriate interchangeable energy storage (6) at the servicing area (5) or at another mining machine (2), required energy to run a respective mining machine (2) to an appropriate interchangeable energy storage (6) at the servicing area (5) or at another mining machine (2); required time to change energy storage (6) or required time to replenish energy storage (6).

8. A method of computing an optimized energy storage utilization in a system according to claim 1, the method comprising:
- (S1) acquiring the data relating to the shared work assignment (8);
- (S2) acquiring the data relating to each of the respective mining machine (2) in the fleet of mining machines using the one or more machine sensors;
- (S3) acquiring the data relating to each of the respective energy storage (6) using the one or more energy storage sensors (not shown);
- (S4) acquiring the location data of each mining machine (2) and each energy storage (6) in the mining environment (3) using a the spatial localization system (11);
- (S5) providing the acquired data to a the fog- and/or cloud- computation system (13) using the communication interface (12);
- (S6) computing, by the fog- and/or cloud- computation system (13), based on the provided data, the optimized energy storage utilization with respect to at least one of the following optimization targets productivity, cost or safety, and
- (S7) automatically deploying to the fleet of mining machines (2), via the communication interface (12), the workflow information for the performance of the shared work assignment (8) based on the optimized energy storage utilization, which workflow comprises the at least one current task for each respective mining machine (2).

9. A computer program product comprising instructions, which when executed by a computer, causing the computer to execute the method of computing an optimized energy storage utilization in a system according to claim 8.

10. A non-transitory computer-readable storage medium (14) having stored thereon the computer program of claim 9.

## Patentansprüche

1. System (1), umfassend eine Flotte von mindestens teilweise autonomen Abbaumaschinen (2), die konfiguriert sind, um in einer definierten Minenumgebung (3) betrieben zu werden, die einen definierten Arbeitsbereich (4) und einen definierten Dienstbereich (5) aufweist, wobei der Dienstbereich (5) konfiguriert ist, um einen oder mehrere unverbundene austauschbare Energiespeicher (6) und Ausrüstung zur Auffüllung (7) solcher unverbundener austauschbarer Energiespeicher (6) aufzunehmen, wobei in der Minenumgebung (3) ein geteilter Arbeitseinsatz (8), der mindestens eine aktuelle Aufgabe für jede jeweilige Abbaumaschine (2) umfasst, durchgeführt wird, wobei das System (1) umfasst:
- eine jeweilige Antriebseinheit (9), die konfiguriert ist, um Mobilität jeder jeweiligen Abbaumaschine (2) bereitzustellen,
- eine jeweilige bordseitige Ausrüstung (10), die jeder jeweiligen Abbaumaschine (2) zugeordnet ist,
- einen oder mehrere Maschinensensoren, die Daten von der Maschine bereitstellen, wobei die Sensoren konfiguriert sind, um jede jeweilige Abbaumaschine (2) in der Flotte von Abbaumaschinen zu überwachen,
- ein Bestand der austauschbaren Energiespeicher (6), wobei jeder Energiespeicher (6) einen oder mehrere Sensoren aufweist, die Daten von den austauschbaren Energiespeichern bereitstellen, wobei die Sensoren konfiguriert sind, um den jeweiligen Energiespeicher (6) zu überwachen, und jeder Energiespeicher (6) selektiv mit mindestens einer aus der Flotte von Abbaumaschinen (2) verbindbar ist, um ihre jeweilige Antriebseinheit (9) und jeweilige bordseitige Ausrüstung (10) zu versorgen;
- ein Raumlokalisierungssystem (11) zum Ableiten von Lokalisierungsdaten jeder Abbaumaschine (2) und jedes Energiespeichers (6) in der Minenumgebung (3);
- eine Kommunikationsschnittstelle (12), die eine Datenverbindung zwischen jeder Abbaumaschine (2) in der Minenumgebung (3) und zu einem Nebel- und/oder Wolkenberechnungssystem (13) bereitstellt;
wobei
- das Nebel- und/oder Wolkenberechnungssystem (13) konfiguriert ist, um auf Basis der Daten von den jeweiligen Abbaumaschinen (2) und Energiespeichern (6), den Standortdaten vom Raumlokalisierungssystem (11) und Daten bezüglich des geteilten Arbeitseinsatzes (8) eine optimierte Energiespeichernutzung in Bezug auf mindestens eines der folgenden Optimierungsziele Produktivität, Kosten oder Sicherheit zu berechnen, und der Flotte von Abbaumaschinen (2) über die Kommunikationsschnittstelle (12) eine Arbeitsablaufinformation für die Durchführung des geteilten Arbeitseinsatzes (8) auf Basis der optimierten Energiespeichernutzung zu übergeben, wobei der Arbeitsablauf mindestens eine aktuelle Aufgabe für jede jeweilige Abbaumaschine (2) umfasst.

2. System nach Anspruch 1, wobei der eine oder die mehreren Maschinensensoren (nicht gezeigt), die jede jeweilige Abbaumaschine (2) in der Flotte von Abbaumaschinen überwachen, konfiguriert sind, um Daten in Bezug auf mindestens ein Umweltmerkmal bereitzustellen.

3. System nach Anspruch 1, wobei der eine oder die mehreren Sensoren, die die jeweiligen Energiespeicher (6) überwachen, konfiguriert sind, um Daten in Bezug auf mindestens eines bereitzustellen aus: Verwendungsstatus; verbleibender Kapazität; Verschleiß und Zustand; und Maschinenkonnektivitätskompatibilität.

4. System nach Anspruch 1, wobei die Daten vom geteilten Arbeitseinsatz (8) Daten in Bezug auf mindestens eines umfassen aus: einem Gesamtplan für den geteilten Arbeitseinsatz, einem Plan für individuelle Aufgaben, individuellen Betriebsplänen, individuellen Betriebszyklen, individuellen Betriebsarten, Minenumgebungsinfrastrukturfähigkeiten und -beschränkungen.

5. System nach Anspruch 3, wobei das Nebel- und/oder Wolkenberechnungssystem (13) weiter konfiguriert ist, um eine individuelle optimierte Energiespeichernutzung für die jeweiligen Abbaumaschinen (2) und die jeweiligen Energiespeicher (6) zu berechnen.

6. System nach Anspruch 1, wobei das Nebel- und/oder Wolkenberechnungssystem (13) weiter konfiguriert ist, um die optimierte Energiespeichernutzung auf Basis von unterschiedlichen Optimierungszielen für die jeweiligen Abbaumaschinen (2) in der Flotte von Abbaumaschinen zu berechnen.

7. System nach Anspruch 1, wobei das Nebel- und/oder Wolkenberechnungssystem (13) weiter konfiguriert ist, um die optimierte Energiespeichernutzung auf Basis von Standortdaten vom Raumlokalisierungssystem (11) unter Berücksichtigung von mindestens einem zu berechnen aus: erforderlicher Zeit, um eine jeweilige Abbaumaschine (2) zu einem geeigneten austauschbaren Energiespeicher (6) am Dienstbereich (5) oder an einer anderen Abbaumaschine (2) zu führen; erforderlicher Energie, um eine jeweilige Abbaumaschine (2) zu einem geeigneten austauschbaren Energiespeicher (6) am Dienstbereich (5) oder an einer anderen Abbaumaschine (2) zu führen; erforderlicher Zeit zum Ändern eines Energiespeichers (6) oder erforderlicher Zeit zum Auffüllen eines Energiespeichers (6).

8. Verfahren zum Berechnen einer optimierten Energiespeichernutzung in einem System nach Anspruch 1, wobei das Verfahren Folgendes umfasst:
- (S1) Erfassen der Daten bezüglich des geteilten Arbeitseinsatzes (8);
- (S2) Erfassen der Daten bezüglich jeder der jeweiligen Abbaumaschine (2) in der Flotte von Abbaumaschinen unter Verwendung des einen oder der mehreren Maschinensensoren;
- (S3) Erfassen der Daten bezüglich jedes des jeweiligen Energiespeichers (6) unter Verwendung des einen oder der mehreren Energiespeichersensoren (nicht gezeigt);
- (S4) Erfassen der Lokalisierungsdaten jeder Abbaumaschine (2) und jedes Energiespeichers (6) in der Minenumgebung (3) unter Verwendung des einen Raumlokalisierungssystems (11);
- (S5) Bereitstellen der erfassten Daten an ein Nebel- und/oder Wolkenberechnungssystem (13) unter Verwendung der Kommunikationsschnittstelle (12);
- (S6) Berechnen, durch das Nebel- und/oder Wolkenberechnungssystem (13) auf Basis der bereitgestellten Daten, der optimierten Energiespeichernutzung in Bezug auf mindestens eines der folgenden Optimierungsziele Produktivität, Kosten oder Sicherheit; und
- (S7) automatisches Übergeben der Arbeitsablaufinformation über die Kommunikationsschnittstelle (12) an die Flotte von Abbaumaschinen (2) für die Durchführung des geteilten Arbeitseinsatzes (8) auf Basis der optimierten Energiespeichernutzung, wobei der Arbeitsablauf die mindestens eine aktuelle Aufgabe für jede jeweilige Abbaumaschine (2) umfasst.

9. Computerprogrammprodukt, das Anweisungen umfasst, die bei Ausführung durch einen Computer den Computer veranlassen, das Verfahren zum Berechnen einer optimierten Energiespeichernutzung in einem System nach Anspruch 8 zu berechnen.

10. Nichtflüchtiges computerlesbares Speichermedium (14), auf dem das Computerprogramm nach Anspruch 9 gespeichert ist.

## Revendications

1. Système (1) comprenant une flotte de machines (2) d'exploitation minière au moins partiellement autonomes, configuré pour fonctionner dans un environnement (3) d'exploitation minière défini, présentant une zone de travail (4) définie et une zone d'entretien (5) définie, ladite zone d'entretien (5) étant configurée pour héberger un ou plusieurs stockages (6) d'énergie interchangeables non connectés et un équipement (7) de réapprovisionnement de tels stockages (6) d'énergie interchangeables non connectés, dans ledit environnement (3) d'exploitation minière, une mission (8) de travail partagée comprenant au moins une tâche en cours pour chaque machine (2) d'exploitation minière respective étant réalisée, le système (1) comprenant :
- une unité (9) de propulsion respective configurée pour assurer la mobilité de chaque machine (2) d'exploitation minière respective,
- un équipement embarqué (10) respectif associé à chaque machine (2) d'exploitation minière respective,
- un ou plusieurs capteurs de machine, fournissant des données provenant de la machine, lesdits capteurs étant configurés pour surveiller chaque machine (2) d'exploitation minière respective dans la flotte de machines d'exploitation minière ;
- une population desdits stockages (6) d'énergie interchangeables, chaque stockage (6) d'énergie présentant un ou plusieurs capteurs, fournissant des données à partir des stockages d'énergie interchangeables, lesdits capteurs étant configurés pour surveiller le stockage (6) d'énergie respectif, et chaque stockage (6) d'énergie pouvant être sélectivement connecté à au moins l'une parmi la flotte de machines (2) d'exploitation minière pour alimenter son unité (9) de propulsion respective et son équipement embarqué (10) respectif ;
- un système de localisation spatiale (11) permettant de dériver des données de localisation de chaque machine (2) d'exploitation minière et de chaque stockage (6) d'énergie dans l'environnement (3) d'exploitation minière ;
- une interface (12) de communication fournissant une liaison de données entre chaque machine (2) d'exploitation minière dans l'environnement (3) d'exploitation minière et un système de calcul par brouillard et/ou par nuage (13) ;
dans lequel
- le système de calcul par brouillard et/ou par nuage (13) est configuré pour calculer, sur la base des données provenant des machines (2) d'exploitation minière respectives et des stockages (6) d'énergie respectifs, les données de localisation provenant du système de localisation spatiale (11), et des données relatives à la mission (8) de travail partagée, une utilisation optimisée du stockage d'énergie par rapport à au moins l'une des cibles d'optimisations suivantes : la productivité, le coût ou la sécurité, et déployer sur la flotte de machines (2) d'exploitation minière, par le biais de l'interface (12) de communication, une information de flux de travail pour l'exécution de la mission (8) de travail partagée sur la base de l'utilisation optimisée du stockage d'énergie, ledit flux de travail comprenant au moins une tâche en cours pour chaque machine (2) d'exploitation minière respective.

2. Système selon la revendication 1, dans lequel les un ou plusieurs capteurs de machine (non représentés) qui surveillent chaque machine (2) d'exploitation minière respective dans la flotte de machines d'exploitation minière sont configurés pour fournir des données par rapport à au moins une propriété environnementale.

3. Système selon la revendication 1, dans lequel les un ou plusieurs capteurs qui surveillent les stockages (6) d'énergie respectifs sont configurés pour fournir des données par rapport à au moins l'un des éléments suivants : l'état d'utilisation ; la capacité restante ; l'usure et l'état de santé ; et la compatibilité avec la connectivité des machines.

4. Système selon la revendication 1, dans lequel les données provenant de la mission (8) de travail partagée comprennent des données concernant au moins l'un des éléments suivants : un plan de mission de travail partagée total, un plan de tâches individuel, des plans d'exploitation individuels, des cycles d'exploitation individuels, des types d'exploitation individuels, des capacités et des contraintes de l'infrastructure de l'environnement d'exploitation minière.

5. Système selon la revendication 3, dans lequel le système de calcul par brouillard et/ou par nuage (13) est en outre configuré pour calculer une utilisation de stockage d'énergie optimisée individuelle pour les machines (2) d'exploitation minière respectives et les stockages (6) d'énergie respectifs.

6. Système selon la revendication 1, dans lequel le système de calcul par brouillard et/ou par nuage (13) est en outre configuré pour calculer l'utilisation optimisée du stockage d'énergie sur la base de différents objectifs d'optimisation pour les machines (2) d'exploitation minière respectives dans la flotte de machines d'exploitation minière.

7. Système selon la revendication 1, dans lequel le système de calcul par brouillard et/ou par nuage (13) est en outre configuré pour calculer l'utilisation optimisée du stockage d'énergie sur la base de données de localisation provenant du système de localisation spatiale (11) en prenant en compte au moins l'un des éléments suivants : le temps nécessaire pour faire fonctionner une machine (2) d'exploitation minière respective sur un stockage (6) d'énergie interchangeable approprié au niveau de la zone d'entretien (5) ou au niveau d'une autre machine (2) d'exploitation minière, l'énergie nécessaire pour faire fonctionner une machine d'exploitation minière (2) respective sur un stockage (6) d'énergie interchangeable approprié au niveau de la zone d'entretien (5) ou au niveau d'une autre machine (2) d'exploitation minière ; le temps nécessaire pour changer le stockage (6) d'énergie ou le temps nécessaire pour recharger le stockage (6) d'énergie.

8. Procédé de calcul d'une utilisation optimisée du stockage d'énergie dans un système selon la revendication 1, le procédé comprenant :
- (S1) l'acquisition des données relatives à la mission (8) de travail partagée ;
- (S2) l'acquisition des données relatives à chacune des machines (2) d'exploitation minière respectives dans la flotte de machines d'exploitation minière au moyen des un ou plusieurs capteurs de machine ;
- (S3) l'acquisition des données relatives à chacun des stockages (6) d'énergie respectifs au moyen des un ou plusieurs capteurs de stockage d'énergie (non représentés) ;
- (S4) l'acquisition des données de localisation de chaque machine (2) d'exploitation minière et de chaque stockage (6) d'énergie dans l'environnement (3) d'exploitation minière au moyen du système de localisation spatiale (11) ;
- (S5) la fourniture des données acquises à un système de calcul par brouillard et/ou par nuage (13) au moyen de l'interface (12) de communication ;
- (S6) le calcul, par le système de calcul par brouillard et/ou par nuage (13), sur la base des données fournies, de l'utilisation optimisée du stockage d'énergie par rapport à au moins l'une des cibles d'optimisation suivantes : la productivité, le coût ou la sécurité, et
- (S7) le déploiement automatique sur la flotte de machines (2) d'exploitation minière, par le biais de l'interface de communication (12), des informations de flux de travail pour l'exécution de la mission (8) de travail partagée sur la base de l'utilisation optimisée du stockage d'énergie, ledit flux de travail comprenant l'au moins une tâche en cours pour chaque machine (2) d'exploitation minière respective.

9. Produit-programme d'ordinateur comprenant des instructions qui, lorsqu'elles sont exécutées par un ordinateur, amènent l'ordinateur à exécuter le procédé de calcul d'une utilisation optimisée du stockage d'énergie dans un système selon la revendication 8.

10. Support (14) de stockage non transitoire lisible par ordinateur sur lequel est stocké le produit-programme d'ordinateur selon la revendication 9.
